# EUROPEAN PATENT APPLICATION

(11) **EP 3 275 966 A1**
(43) Date of publication of application: **31.01.2018**
(21) Application number: 16768732.6
(22) Date of filing: 22.03.2016
(51) Int. Cl.: C09K 5/10, C09K 3/00, C09K 5/20

(54) **HEAT MEDIUM LIQUID**

(30) Priority: 24.03.2015 JP 2015061492; 11.11.2015 JP 2015221400
(71) Applicant: Osaka Gas Co., Ltd., Osaka-shi, Osaka 541-0046 (JP)
(72) Inventor: KISHIMOTO Akira, Osaka-shi Osaka 541-0046 (JP); IKEMOTO Saki, Osaka-shi Osaka 541-0046 (JP)
(74) Representative: Lemcke, Brommer & Partner Patentanwälte Partnerschaft mbB
(86) International application number: PCT/JP2016/058909
(87) International publication number: WO 2016/152829

(57) **Abstract**

Provided is a heat medium liquid having low effervescence while compatibly retaining two properties of low flow friction resistance and high heat transfer efficiency. The head medium liquid contains antifreeze liquid. And, to the heat medium liquid, there is added at least one kind of compound selected from the group consisting of water-soluble polymer compound, poly (polyethylene glycol) (propylene glycol) copolymer fatty acid ester, sulfonated tetrafluoroethylene polymer, amine oxide compound, polyethylene glycol dicarboxylic acid ester, polypropylene glycol dicarboxylic acid ester and poly (ethylene glycol) (propylene glycol) copolymer dicarboxylic ester.

## Description

### TECHNICAL FIELD

The present invention relates to heat medium liquid containing antifreeze liquid.

### BACKGROUND ART

For instance, for cold/hot water for air conditioning, a heat generating body (system) and a heat releasing body (system) are connected to each other via a circulation passage, so that heat medium liquid is circulated via this circulating flow. In such system, a pipe for circulating liquid (e.g. water) as cold medium (heat medium liquid) can sometimes be as long as a few kilometers. Thus, transporting power required for such liquid can be significant and is said to account for as much as approximately 60% to 70% of the running cost of the system.

As an effective measure to reduce such liquid transporting power, methods have been proposed for significantly reducing flow friction resistance by using heat medium liquid containing polymer or surfactant water solution exhibiting viscoelasticity.

This is said to be attributable to the following mechanism. Namely, when a certain polymer or the surfactant comprising a mixture of quaternary ammonium salt and salicylate is dissolved in the order of e.g. several tens or several thousands of ppm in the liquid, e.g. water, that flows in the pipe defining the circulation passage, the polymer or the surfactant will form molecular aggregates and these aggregates develop into bar-like configuration and become entangled in a higher order, thus providing the viscoelasticity. Here, the term "viscoelasticity" refers to what is specifically called pseudo-plasticity characterized by non-uniform viscosity, which provides e.g. high viscosity under low shearing stress and low viscosity under high shearing stress. Polymers or surfactants exhibiting such property or a method of reducing friction resistance in a water transporting pipe using such polymer or surfactant are disclosed in Patent Documents 1 through 4, etc., for instance.

### PRIOR ART DOCUMENTS

### PATENT DOCUMENTS

Patent Document 1: Japanese Patent Application Publication No. 3-76360
Patent Document 2: Japanese Patent Application Publication No. 4-6231
Patent Document 3: Japanese Patent Application Publication No. 5-47534
Patent Document 4: Japanese Unexamined Patent Application Publication No. 8-311431

### SUMMARY

### PROBLEM TO BE SOLVED BY INVENTION

However, in the case of presence of antifreeze liquid in such heat medium liquid, there is a problem that the above polymer or surfactant may fail to serve effectively for reduction of the flow friction resistance. If reduction of flow friction resistance or heat transfer control for such heat medium liquid added with antifreeze liquid could be realized, energy saving in a wide variety of uses would be made possible. Thus, there is a need for a technique for reducing flow friction resistance.

Here, "antifreeze liquid" is such liquid comprising water added with a certain additive for prevention of freezing of water at a temperature below zero. As a typical example of such additive (which per se may sometimes be called "antifreeze liquid"), there is a polar solvent such as ethylene glycol or propylene glycol, etc. If mixture of water with addition by 10 wt.% to 60 wt.% of such ethylene glycol or propylene glycol, etc. is used as a heat medium liquid, this can be used without being frozen in a cold region or the like. Thus, heat medium liquid with addition of such antifreeze liquid is widely used as heating water in a cold region or automobile engine cooling water ("coolant").

Further, in the case of reduction of flow friction resistance of heat medium liquid with use of such polymer or surfactant, it is known that the use provides not only significant reduction of flow friction resistance, but also reduction of heat transfer at the same time. Although such heat transfer reduction provides certain advantageous effects such as suppression of wasteful heat release in the circulation passage and ability to suppress temperature change of the heating body due to ambient environment, for the heat releasing body, the heat transfer reduction leads to deterioration in the required heat releasing efficiency. Thus, there arises a problem of needing to increase the volume of the heat releasing body in order to obtain a same heat discharge amount as before.

Moreover, in the case of reduction of flow friction resistance of heat medium liquid with use of such polymer or surfactant, this entails increased effervescence of the heat medium liquid, as a result of which generation of air bubble, though may be in a minute amount, will lead to occurrence of cavitation in the pump, thus tending to invite such problem as disabled heat medium liquid circulation due to racing of the pump.

Therefore, there is a need to provide a heat medium liquid capable of alleviating such problems as described above as the medium contains antifreeze liquid having less effervescence while compatibly retaining two properties of low flow friction resistance and high heat transfer efficiency compatibly with each other.

### Solution

### [Arrangement 1]

A heat medium liquid according to the present invention comprises a heat medium liquid containing antifreeze liquid; wherein to the heat medium liquid, as a flow friction reducing agent, there is added at least one kind of compound selected from the group consisting of water-soluble polymer compound, poly (polyethylene glycol) (propylene glycol) copolymer fatty acid ester, sulfonated tetrafluoroethylene polymer, amine oxide compound, polyethylene glycol dicarboxylic acid ester, polypropylene glycol dicarboxylic acid ester and poly (ethylene glycol) (propylene glycol) copolymer dicarboxylic ester.

### [Arrangement 2]

Incidentally, the antifreeze liquid can be ethylene glycol or propylene glycol.

### [Arrangement 3]

Further, the flow friction reducing agent can be a water-soluble polymer compound and the heat medium liquid can contain the flow friction reducing agent by a ratio equal to or greater than 100 mg/L. Here, the language "ratio" is understood to be equivalent to "concentration".

### [Arrangement 4]

The flow friction reducing agent is poly (ethylene glycol) (propylene glycol) copolymer fatty acid ester, and the heat medium liquid contains the flow friction reducing agent by a ratio equal to or greater than 1g/L.

### [Arrangement 5]

The flow friction reducing agent is sulfonated tetrafluoroethylene polymer, and the heat medium liquid contains the flow friction reducing agent by a ratio equal to or greater than 10 mg/L.

### [Arrangement 6]

The flow friction reducing agent is amine oxide compound, and the heat medium liquid contains the flow friction reducing agent by a ratio equal to or greater than 1 g/L.

### [Arrangement 7]

The flow friction reducing agent is polyethylene glycol dicarboxylic acid ester, and the heat medium liquid contains the flow friction reducing agent by a ratio equal to or greater than 100 mg/L.

### [Arrangement 8]

The flow friction reducing agent is polypropylene glycol dicarboxylic acid ester polyethylene glycol dicarboxylic acid ester, and the heat medium liquid contains the flow friction reducing agent by a ratio equal to or greater than 10 mg/L.

### [Arrangement 9]

The flow friction reducing agent is poly (ethylene glycol) (propylene glycol) copolymer dicarboxylic ester, and the heat medium liquid contains the flow friction reducing agent by a ratio equal to or greater than 10 mg/L.

### [Function and Effect]

As a result of extensive and intensive studies, the present inventors have experimentally revealed that addition, as a flow friction reducing agent, of at least one kind of compound selected from the group consisting of water-soluble polymer compound, poly (polyethylene glycol) (propylene glycol) copolymer fatty acid ester, sulfonated tetrafluoroethylene polymer, amine oxide compound, polyethylene glycol dicarboxylic acid ester, polypropylene glycol dicarboxylic acid ester and poly (ethylene glycol) (propylene glycol) copolymer dicarboxylic ester achieves reduction of the flow friction resistance of the heat medium liquid in spite of the coexistence of antifreeze liquid therein. The present invention has been realized based on this new finding.

Incidentally, what is referred to as "water-soluble polymer compound" in the context of the present invention is meant to represent a group of water-soluble compounds having a molecular weight ranging from 10,000 to 5,000,000 approximately.

Namely, when any one of these flow friction reducing agents is employed, it has become possible to provide a heat medium liquid capable of providing the two properties of low flow friction resistance and high heat transfer efficiency compatibly, yet having low effervescence.

Here, the water-soluble polymer compound can be those based on saccharides such as mannose, galactose, glucose, glucuronic acid, etc. As preferred examples thereof, there can be cited xanthan gum, succinoglycan, locust bean gum, guar gum, carrageenan, pectin, gellan gum, diutan gum, starch, dextrin, hydroxypropyl cellulose, hydroxypropyl methylcellulose, etc.

Further, as examples of poly (ethylene glycol) (propylene glycol) copolymer fatty acid ester, those having molecular units of ethylene glycol and propylene glycol ranging from 1 to 100 can be cited as preferred examples for use. Further, one having the range from 1 to 50 can be cited as more preferred example for its good solubility in the water-based liquid. Moreover, the fatty acid ester group substituted in the molecule is not particularly limited, but can be a fatty acid group having from 1 to 22 carbons. Further, in consideration to the industrial availability, a hydrogen group or an alkyl group having from 10 to 18 carbons is preferred. Further, the alkyl group can be linear, branched or can also be an alkenyl group having a double bond.

Particularly preferred examples are those whose total number of molecular units of ethylene glycol and propylene glycol ranges from 2 to 200, such as poly (ethylene glycol) (propylene glycol) copolymer stearate, poly (ethylene glycol) (propylene glycol) copolymer lauric acid ester, poly (ethylene glycol) (propylene glycol) copolymer distearate ester, poly (ethylene glycol) (propylene glycol) copolymer dilauric acid ester.

Further, as an example of sulfonated tetrafluoroethylene based polymer, trade name: Nafion can be cited.

Also, as examples of amine oxide compound, those whose three substitution groups bonded to nitrogen atom are alkyl or alkenyl group having from 1 to 24 carbons can be cited. Of those, particularly preferred examples are those readily dissolved in the water-based liquid having substitution of the alkyl group having from 1 to 18 carbons. As examples thereof, there can be cited lauryl dimethyl amine oxide, cetyl dimethyl amine oxide, stearyl dimethyl amine oxide, lauryl dihydroxy methyl amine oxide, cetyl dihydroxy methyl amine oxide, stearyl dihydroxy ethyl methyl amine oxide, lauryl dihydroxy ethyl amine oxide, cetyl dihydroxy ethyl amine oxide, stearyl dihydroxy ethyl amine oxide, etc.

As polyethylene glycol dicarboxylic acid ester, those whose ethylene glycol has a molecular unit ranging from 1 to 100 can be used preferably. As polypropylene glycol dicarboxylic acid ester, those whose propylene glycol has a molecular unit ranging from 1 to 50 can be used preferably. In the case of poly (ethylene glycol) (propylene glycol) copolymer dicarboxylic acid ester, those in which the total of the molecular unit of ethylene glycol unit and the molecular unit of propylene glycol ranges from 2 to 50 can be used preferably.

Dicarboxylic acid ester to be substituted in the molecule is not particularly limited, but can be dicarboxylic acid ester having from 2 to 6 carbons. Further, in consideration to the industrial availability, a hydrogen group or dicarboxylic acid having from 2 to 4 carbons is preferred. Further, the alkyl group can be linear, branched or can also be an alkenyl group having a double bond.

In consideration to the solubility in the water-based liquid, polyethylene glycol dicarboxylic acid ester whose ethylene glycol unit has a molecular unit ranging from 1 to 50 is more preferred.

As some preferred examples, there can be cited those whose ethylene glycol has a molecular unit ranging from 1 to 50, such as polyethylene glycol oxalate, polyethylene glycol malonic acid esters, polyethylene glycol succinate, or polyethylene glycol glutaric acid ester.

As antifreeze liquid, ethylene glycol is used preferably, which has been experimentally shown to have favorable effects in both the flow friction resistance reduction and heat transfer efficiency improvement by the flow friction reducing agent. And, it is apparent that similar effects for the flow friction resistance reduction and heat transfer efficiency improvement can be expected also from propylene glycol having a structure and a molecular weight similar to those of ethylene glycol.

Further, from examples to be detailed later herein, the following observations have been made. The water-soluble polymer compound should preferably be contained in the heat medium liquid by a ratio equal to or greater than 100 mg/L. Preferably, poly (ethylene glycol) (propylene glycol) copolymer fatty acid ester is contained in the heat medium liquid by a ratio equal to or greater than 1 g/L. Preferably, sulfonated tetrafluoroethylene based polymer is contained in the heat medium liquid by a ratio equal to or greater than 10 mg/L. Preferably, amine oxide compound is contained in the heat medium liquid by a ratio equal to or greater than 1 g/L.

Preferably, polyethylene glycol dicarboxylic acid ester is contained in the heat medium liquid by a ratio equal to or greater than 100 mg/L. Preferably, polypropylene glycol dicarboxylic acid ester is contained in the heat medium liquid by a ratio equal to or greater than 10 mg/L. Preferably, poly (ethylene glycol) (propylene glycol) copolymer dicarboxylic acid ester is contained in the heat medium liquid by a ratio equal to or greater than 10 mg/L.

Incidentally, the heat medium liquid according to the present invention can contain other various additives than the antifreeze liquid and the flow friction reducing agent. For instance, an agent for providing anti-corrosion property, an agent for preventing effervescence or an agent for modulating viscosity can be added. Some examples of corrosion preventing agent are nitrates, phosphates, molybdates, etc. Some examples of effervescence preventing agents are silicon compound such as silicone, silicon-based alcohol, inorganic salt such as lithium chloride. Some examples of viscosity modulating agent are non-ionic polymer, non-ionic surfactant, cellulose derivative, etc.

### Effects of Invention

Therefore, it has become possible to provide a heat medium liquid having low effervescence while compatibly retaining two properties of low flow friction resistance and high heat transfer efficiency. And, in a wide variety of use such as use as a heat medium liquid for e.g. water cooling/heating for air conditioning, etc., energy saving will be made possible.

### Brief Description of Drawings

[Fig.1] is a graph showing a pressure loss ratio (a) and a temperature rise ratio (b) in Example 1,
[Fig.2] is a graph showing a pressure loss ratio (a) and a temperature rise ratio (b) in Example 2,
[Fig.3] is a graph showing a pressure loss ratio (a) and a temperature rise ratio (b) in Example 3,
[Fig.4] is a graph showing a pressure loss ratio (a) and a temperature rise ratio (b) in Example 4,
[Fig.5] is a graph showing a pressure loss ratio (a) and a temperature rise ratio (b) in Example 5,
[Fig.6] is a graph showing a pressure loss ratio (a) and a temperature rise ratio (b) in Example 6,
[Fig.7] is a graph showing a pressure loss ratio (a) and a temperature rise ratio (b) in Example 7,
[Fig.8] is a graph showing a pressure loss ratio (a) and a temperature rise ratio (b) in Example 8, and
[Fig.9] is a graph showing a pressure loss ratio (a) and a temperature rise ratio (b) in Example 9.

### Embodiments

Next, heat medium liquid according to embodiments will be explained. Incidentally, although some preferred embodiments will be shown next, it is understood that these respective embodiments are disclosed for the purpose of illustrating the present invention more specifically and that the present invention can be modified in many other ways as long as such modifications do not result in departure or deviation from the essential spirit and scope of the present invention and that the present invention is not to be limited in any way by the following description.

A heat medium liquid relating to an embodiment of the present invention comprises a water-soluble liquid that contains antifreeze liquid and that contains also, as a flow friction reducing agent, at least one kind of compound selected from the group consisting of water-soluble polymer compound, poly (polyethylene glycol) (propylene glycol) copolymer fatty acid ester, sulfonated tetrafluoroethylene polymer, amine oxide compound, polyethylene glycol dicarboxylic acid ester, polypropylene glycol dicarboxylic acid ester and poly (ethylene glycol) (propylene glycol) copolymer dicarboxylic ester.

Here, as the antifreeze liquid, ethylene glycol or propylene glycol can be used.

Here, the water-soluble polymer compound can be those based on saccharides such as mannose, galactose, glucose, glucuronic acid, etc. As preferred examples thereof, there can be cited xanthan gum, succinoglycan, locust bean gum, guar gum, carrageenan, pectin, gellan gum, diutan gum, starch, dextrin, hydroxypropyl cellulose, hydroxypropyl methylcellulose, etc.

Further, as examples of poly (ethylene glycol) (propylene glycol) copolymer fatty acid ester, those having molecular units of ethylene glycol and propylene glycol ranging from 1 to 100 can be cited as preferred examples for use. Further, one having the range from 1 to 50 can be cited as more preferred example for its good solubility in the water-based liquid. Moreover, the fatty acid ester group substituted in the molecule is not particularly limited, but can be a fatty acid group having from 1 to 22 carbons. Further, in consideration to the industrial availability, a hydrogen group or an alkyl group having from 10 to 18 carbons is preferred. Further, the alkyl group can be linear, branched or can also be an alkenyl group having a double bond.

Particularly preferred examples are those whose total number of molecular units of ethylene glycol and propylene glycol ranges from 2 to 200, such as poly (ethylene glycol) (propylene glycol) copolymer stearate, poly (ethylene glycol) (propylene glycol) copolymer lauric acid ester, poly (ethylene glycol) (propylene glycol) copolymer distearate ester, poly (ethylene glycol) (propylene glycol) copolymer dilauric acid ester.

Further, as an example of sulfonated tetrafluoroethylene based polymer, trade name: Nafion can be cited.

Also, as examples of amine oxide compound, those whose three substitution groups bonded to nitrogen atom are alkyl or alkenyl group having from 1 to 24 carbons can be cited. Of those, particularly preferred examples are those readily dissolved in the water-based liquid having substitution of the alkyl group having from 1 to 18 carbons. As examples thereof, there can be cited lauryl dimethyl amine oxide, cetyl dimethyl amine oxide, stearyl dimethyl amine oxide, lauryl dihydroxy methyl amine oxide, cetyl dihydroxy methyl amine oxide, stearyl dihydroxy ethyl methyl amine oxide, lauryl dihydroxy ethyl amine oxide, cetyl dihydroxy ethyl amine oxide, stearyl dihydroxy ethyl amine oxide, etc.

As polyethylene glycol dicarboxylic acid ester, those whose ethylene glycol has a molecular unit ranging from 1 to 100 can be used preferably. As polypropylene glycol dicarboxylic acid ester, those whose propylene glycol has a molecular unit ranging from 1 to 50 can be used preferably. In the case of poly (ethylene glycol) (propylene glycol) copolymer dicarboxylic acid ester, those in which the total of the molecular unit of ethylene glycol unit and the molecular unit of propylene glycol ranges from 2 to 50 can be used preferably.

Dicarboxylic acid ester to be substituted in the molecule is not particularly limited, but can be dicarboxylic acid ester having from 2 to 6 carbons. Further, in consideration to the industrial availability, a hydrogen group or dicarboxylic acid having from 2 to 4 carbons is preferred. Further, the alkyl group can be linear, branched or can also be an alkenyl group having a double bond.

In consideration to the solubility in the water-based liquid, polyethylene glycol dicarboxylic acid ester whose ethylene glycol unit has a molecular unit ranging from 1 to 50 is more preferred.

As some preferred examples, there can be cited those whose ethylene glycol has a molecular unit ranging from 1 to 50, such as polyethylene glycol oxalate, polyethylene glycol malonic acid esters, polyethylene glycol succinate, or polyethylene glycol glutaric acid ester.

The solvent of the heat medium liquid is based on water, but can contain additionally an agent for providing anti-corrosion property, an agent for preventing effervescence or an agent for modulating viscosity. Some examples of corrosion preventing agent are nitrates, phosphates, molybdates, etc. Some examples of effervescence preventing agents are silicon compound such as silicone, silicon-based alcohol, inorganic salt such as lithium chloride. Some examples of viscosity modulating agent are non-ionic polymer, non-ionic surfactant, cellulose derivative, etc.

Incidentally, the concentration of the compound as the flow friction reducing agent to be mixed in the heat medium liquid should be 500g/L or less, in view of suppression of occurrence of turbidity or precipitation, more preferably be 100 g/L or less, still more preferably be 30g/L or less or even more preferably be 20g/L or less. In view of the results of experiments to be described later herein, the concentration of the compound as the flow friction reducing agent should be 30g/L or less, even more preferably 10 mg/L or more and 20g/L or less.

### <Test of flow friction resistance reduction and heat transfer suppression effects> (Testing Conditions)

In order to confirm the effects of the heat medium liquid of the present invention, testing was performed as follows with using a simulated circulation line. As the simulated circulation line, there was used a closed circuit circulation line using a 5 m stainless pipe having pipe size 15A and a single suction volute pump (from Iwaki Co., Ltd.) and an electromagnetic flowmeter (from KEYENCE CORPORATION). The single suction volute pump was equipped with an inverter for allowing change of its rotational speed. In the 5 m stainless pipe, a straight pipe portion 2m was provided so that an outer circumference of this straight pipe portion can be heated uniformly by a tape heater. Further, at an upstream portion and a downstream portion of the straight pipe portion respectively, a pressure determining portion and a temperature determining portion were provided so as to allow determination of a pressure difference between the upstream portion and the downstream portion of the straight pipe portion. Moreover, at the temperature determining portions of the upstream portion and the downstream portion of the straight pipe portion, platinum temperature determining resistors were provided to allow determination of temperature of heat medium liquid circulating in the pipe.

### (Reference Heat Medium)

Firstly, as a heat medium liquid as a reference, there was employed mixture of ethylene glycol and water adjusted to a volume ratio of 1: 1 ("reference heat medium" hereinafter) therebetween. This is a same composition as one commonly used as heating hot water in a cold region or as automobile engine coolant. The reference heat medium was charged in the simulated circulation line and the rotational speed of the pump was adjusted by the inverter to a flow rate of 50 L/min. Circulation was started with the heat medium liquid temperature being a room temperature (20°C). Heating was carried out constantly by the tape heater at about 1 kW. At timings when the upstream temperature of the straight pipe portion became 40°C, 50°C, 60°C, 70°C and 80°C, respectively, pressure losses and temperature rise amounts described above were determined to give the respective values PO, TO.

### (Example 1)

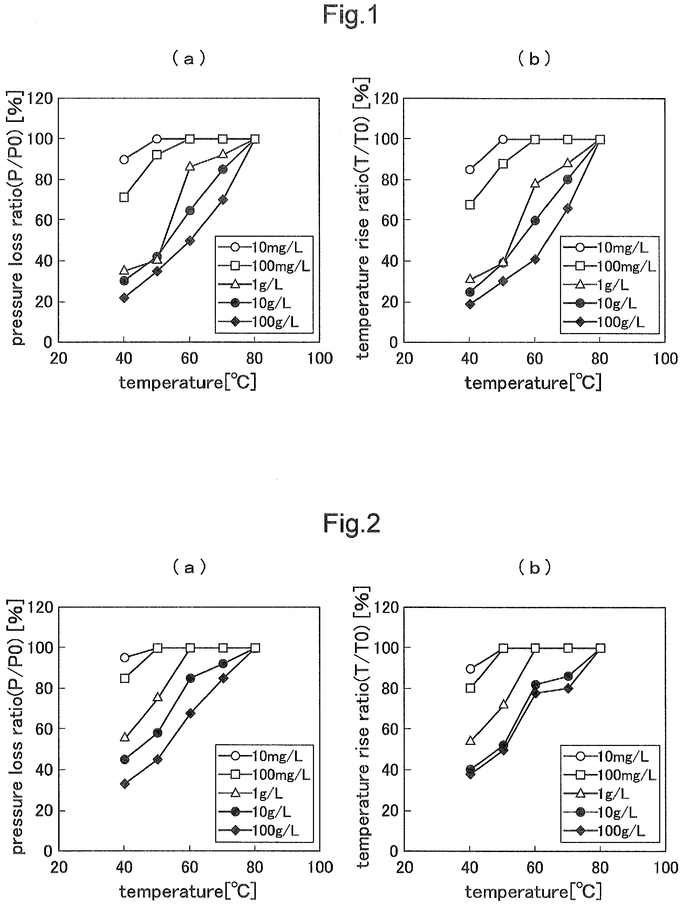

A test heat medium liquid was prepared by adding, to the reference medium, xanthan gum (from Sansho Co., Ltd., a kind of water-soluble polymer compound) to testing concentrations. On this testing heat medium liquid, by the same procedure to the one described above for the reference medium, pressure losses P and temperature rise amounts T were determined. The testing concentrations were five types, i.e. 10 mg/L, 100 mg/L, 1 g/L, 10 g/L and 100 g/L. The results are shown in Fig. 1. In Fig. 1, for the downstream pressure P and the downstream temperature T of the straight pipe portion, ratios (=P/P0, T/T0) relative to the downstream pressure P0 and the downstream temperature T0 of the reference heat medium were obtained as a pressure loss ratio and a temperature rise ratio and represented in the scale of percentage.

### (Example 2)

A test heat medium liquid was prepared by adding, to the reference medium, poly (ethylene glycol) (propylene glycol) copolymer stearate (from Nikko Chemicals Co., Ltd.) to the testing concentrations. On this testing heat medium liquid, by the same procedure as the one described above for the reference heat medium, pressure losses P and temperature rise amounts T were determined. The results are shown in Fig. 2.

### (Example 3)

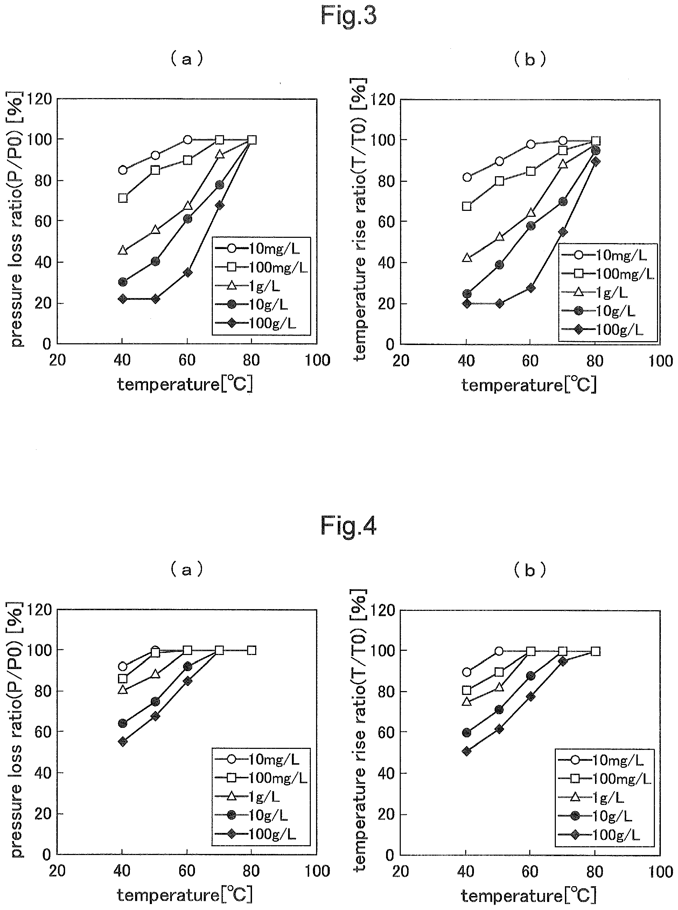

A test heat medium liquid was prepared by adding, to the reference medium, sulfonated tetrafluoroethylene-based polymer (Wako Pure Chemical Industries, Ltd., product name: Nafion 20) to the testing concentrations. On this testing heat medium liquid, by the same procedure as the one described above for the reference heat medium, pressure losses P and temperature rise amounts T were determined. The results are shown in Fig. 3.

### (Example 4)

A test heat medium liquid was prepared by adding, to the reference medium, amine oxide (NOF Corporation, product name UNISAFE A-LE) to the testing concentrations. On this testing heat medium liquid, by the same procedure as the one described above for the reference heat medium, pressure losses P and temperature rise amounts T were determined. The results are shown in Fig. 4.

### (Example 5)

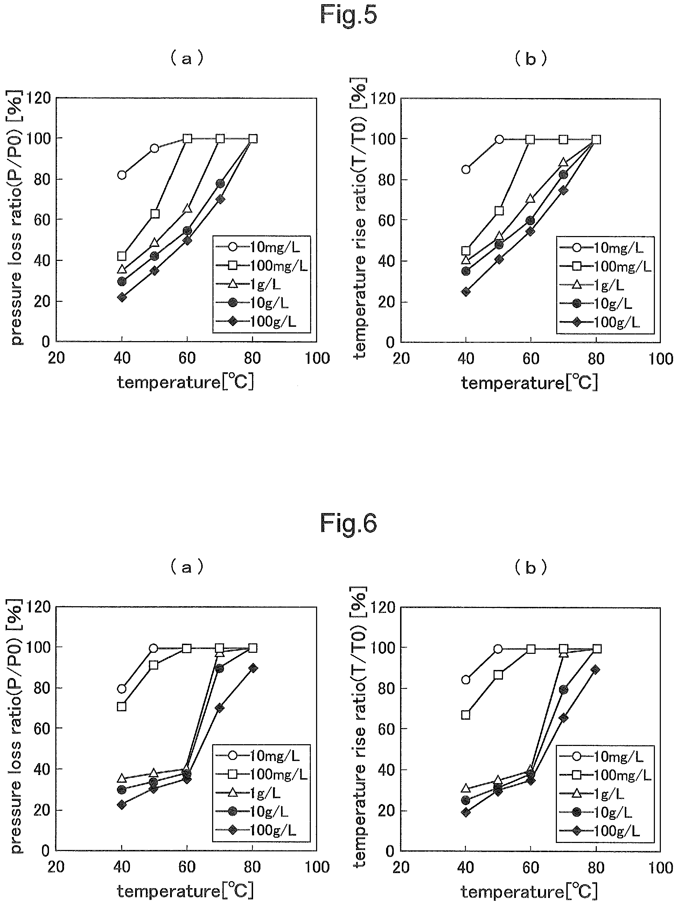

As a heat medium liquid as a reference, instead of ethylene glycol, an actual coolant for liquid-cooled internal combustion engine (Long-Life Coolant, Cosmo Trade & Service Co. Ltd.,) was employed and this liquid-cooled internal combustion engine coolant and water were adjusted to a volume ratio of 1: 1 (to be referred to as "actual coolant reference heat medium" hereinafter). According to the product safety data sheet (MSDS) of the liquid-cooled internal combustion engine coolant, components and their contents of the liquid-cooled internal combustion engine coolant are as follows (represented in the form of component name (weight percentage of content)): ethylene glycol (90-94 wt.%), rust-preventing agent (3-5 wt.%), water (3-5 wt.%), foam-preventing agent (trace amount), pigment (trace amount). A test heat medium liquid was prepared by adding, to this reference heat medium, succinoglycan (from Sansho Co., Ltd., a kind of water-soluble polymer compound) to testing concentrations. On this testing heat medium liquid, by the same procedure as the one described above for the reference heat medium, pressure losses P and temperature rise amounts T were determined. The results are shown in Fig. 5.

### (Example 6)

A test heat medium liquid was prepared by adding, to the reference medium, polyethylene glycol succinate ester whose ethylene glycol has a molecular unit of 20 (from NOF Corporation) to the testing concentrations. On this testing heat medium liquid, by the same procedure as the one described above for the above reference heat medium, pressure losses P and temperature rise amounts T were determined. The results are shown in Fig. 6.

### (Example 7)

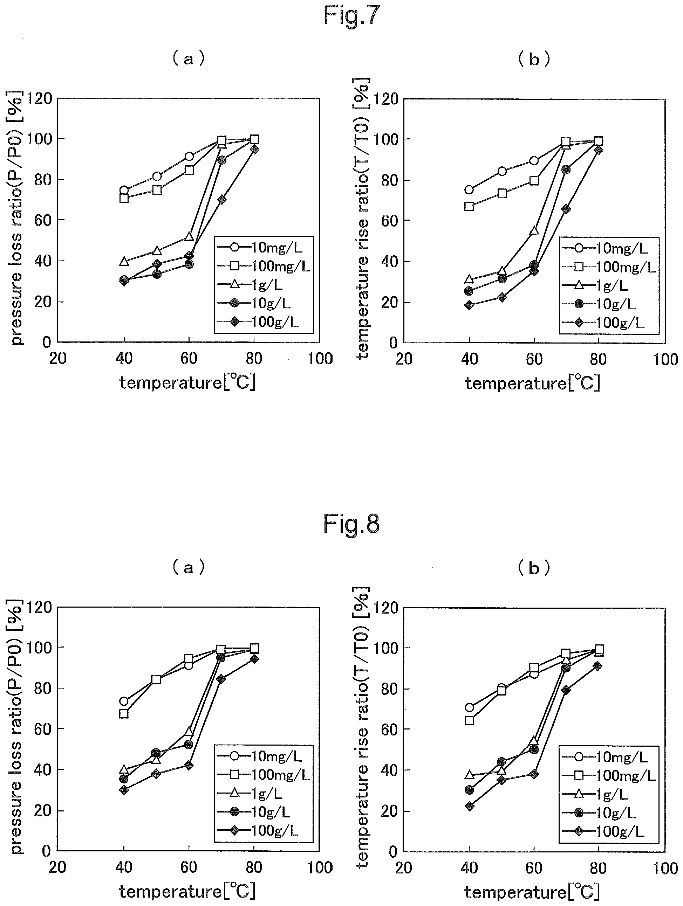

A test heat medium liquid was prepared by adding, to the reference medium, polyethylene glycol succinate ester whose ethylene glycol has a molecular unit of 15 (from NOF Corporation) to the testing concentrations. On this testing heat medium liquid, by the same procedure as the one described above for the reference heat medium, pressure losses P and temperature rise amounts T were determined. The results are shown in Fig. 7.

### (Example 8)

A test heat medium liquid was prepared by adding, to the reference medium, poly (ethylene glycol)(propylene glycol) copolymer succinate ester whose ethylene glycol and propylene glycol respectively have a molecular unit of 10 (from NOF Corporation) to the testing concentrations. On this testing heat medium liquid, by the same procedure as the one described above for the reference heat medium, pressure losses P and temperature rise amounts T were determined. The results are shown in Fig. 8.

### (Comparison Example 1)

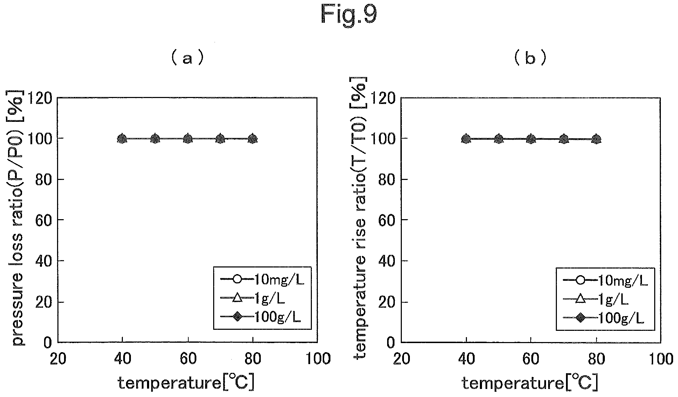

A test heat medium liquid was prepared by adding, to the reference medium, cetyltrimethylammonium chloride and sodium salicylate by an equimolar ratio to the testing concentrations. On this testing heat medium liquid, by the same procedure as the one described above for the reference heat medium, pressure losses P and temperature rise amounts T were determined. The results are shown in Fig. 9.

### (Summary of test of flow friction resistance reduction and heat transfer suppression effects)

The above Examples and Comparison Example indicate the smaller the pressure loss between the pressure detecting portions of the upstream portion and the downstream portion of the straight pipe portion, the higher the flow friction resistance reducing effect. Also, since the heat medium liquid is heated by the heater from the outside of the pipe, the heat medium liquid temperature is higher at the downstream portion than the upstream portion of the straight pipe portion. With comparison of the temperature rise amounts at this downstream portion, the heat transfer performance can be evaluated as being high.

As a result, it can be seen that in comparison with Comparison Example, Examples 1-8 achieved flow friction resistance reducing effect and heat transfer reducing effect relative to the reference heat medium under the heat medium liquid use condition of 60°C or lower.

Namely, all of Examples 1-8, in comparison with Comparison Example, showed the tendency of the more pressure loss and temperature rise amount reduction observed, the lower the temperature. Based on this, it may be said that in all of Examples 1-8, the flow resistance reduction effect and heat transfer suppression effect can be provided more easily as the temperature becomes lower.

It was also found that in all of Examples 1-8, with increase of the concentration of the additives, the values of the pressure loss reduction ratio and temperature rise ratio reduction become smaller. Based on this, it may be said that in all of Examples 1-8, the flow resistance reduction effect and heat transfer suppression effect can be provided more easily as the additive concentration becomes higher.

On the other hand, in Comparison Example 1, no reductions in the pressure loss reduction ratio and temperature rise ratio occur at any temperature. Namely, it was found that neither the pressure loss reducing effect nor heat transfer suppressing effect is achieved. The mixture of cetyltrimethylammonium chloride and sodium salicylate employed in Comparison Example 1 is known to exhibit a pressure loss reducing effect when only water is used as heat medium liquid. However, it has been shown that these materials do not provide the pressure loss reducing effect or heat transfer suppressing effect in an antifreeze liquid system such as ethylene glycol.

As indicated by these results, for the additives used in Examples 1-8, it has been shown that with adjustment of their concentrations, it becomes possible to achieve the pressure loss reducing effect and heat transfer suppressing effect at a defined temperature.

Next, respecting the additives of Examples 1-8, more preferred concentration ranges thereof will be investigated. With reference to Figs. 1-8, concentration dependencies of pressure loss ratio and temperature rise ratio around 50°C at which heat medium liquid is often used, among various het medium liquid use conditions ranging at 60°C or lower will be confirmed.

In the case of xanthan gum (a water-soluble polymer) of Example 1, as shown in Fig. 1, the pressure loss ratio and temperature rise ratio at 50°C are 100% at the concentration of 10 mg/L. Namely, at the concentration of 10 mg/L, no flow resistance reducing effect or no heat transfer suppressing effect are provided. On the other hand, at the concentration of 100 mg/L, the pressure loss ratio and temperature rise ratio drop to about 90%. Namely, it can be seen that at this concentration of 100 mg/L, flow resistance reducing effect and heat transfer suppressing effect are provided. Therefore, it may be understood from the result of Example 1 that for xanthan gum (a water-soluble polymer), its preferred content is 100 mg/L or higher.

In the case of poly (ethylene glycol) (propylene glycol) copolymer stearate of Example 2, as shown in Fig. 2, the pressure loss ratio and temperature rise ratio at 50°C are 100% at the concentrations of 10 mg/L and 100 mg/L, respectively. Namely, at the concentration of 100 mg/L or lower, no flow resistance reducing effect or no heat transfer suppressing effect are provided. On the other than, at the concentration of 1 g/L, the pressure loss ratio and temperature rise ratio drop to 80% or lower. Namely, it can be seen that at this concentration of 1 g/L, flow resistance reducing effect and heat transfer suppressing effect are provided. Therefore, it may be understood from the result of Example 2 that for poly (ethylene glycol) (propylene glycol) copolymer stearate, its preferred content is 1 g/L or higher.

In the case of sulfonated tetrafluoroethylene-based polymer of Example 3, as shown in Fig. 3, the pressure loss ratio and temperature rise ratio at 50°C are about 90% at the concentration of 10 mg/L. Namely, it can be seen that at this concentration of 10 mg/L, flow resistance reducing effect and heat transfer suppressing effect are provided. Therefore, it may be understood from the result of Example 3 that for sulfonated tetrafluoroethylene-based polymer, its preferred content is 10 mg/L or higher.

In the case of amine oxide compound of Example 4, as shown in Fig. 4, the pressure loss ratio and temperature rise ratio at 50°C are 100% at the concentration of 10 mg/L. Namely, at the concentration of 10 mg/L or lower, no flow resistance reducing effect or no heat transfer suppressing effect are provided. On the other hand, at the concentration of 1 g/L, the pressure loss ratio and temperature rise drop to about 90% or lower. Namely, it can be seen that at this concentration of 1 g/L, both flow resistance reducing effect and heat transfer suppressing effect are provided. Therefore, it may be understood from the result of Example 4 that for amine oxide compound, its preferred content is 1 g/L or higher.

In the case of succinoglycan (a kind of water-soluble polymer compound) of Example 5, as shown in Fig. 5, at the concentration of 10 mg/L, the pressure loss ratio is 100% whereas the temperature rise ratio is about 90%. Namely, at the concentration of 10 mg/L or lower, no heat transfer suppressing effect is provided. On the other hand, at the concentration of 100 mg/L, the pressure loss ratio and temperature rise drop to about 70% or lower. Namely, it can be seen that at this concentration of 100 mg/L, both flow resistance reducing effect and heat transfer suppressing effect are provided. Therefore, it may be understood from the result of Example 5 that for succinoglycan (kind of water-soluble polymer compound), its preferred content is 100 mg/L or higher.

In the case of polyethylene glycol succinate ester of Example 6, as shown in Fig. 6, the pressure loss ratio and temperature rise ratio at 50°C are 100% at the concentration of 10 mg/L. Namely, at the concentration of 10 mg/L or lower, no flow resistance reducing effect or no heat transfer suppressing effect are provided. On the other hand, at the concentration of 100 mg/L, the pressure loss ratio and temperature rise drop to about 90% or lower. Namely, it can be seen that at this concentration of 100 mg/L, both flow resistance reducing effect and heat transfer suppressing effect are provided. Therefore, it may be understood from the result of Example 6 that for polyethylene glycol succinate ester, its preferred content is 100 mg/L or higher.

In the case of polyethylene glycol succinate ester of Example 7, as shown in Fig. 7, the pressure loss ratio and temperature rise ratio at 50°C are about 80% at the concentration of 10 mg/L. Namely, it can be seen that at this concentration of 10 mg/L, flow resistance reducing effect and heat transfer suppressing effect are provided. Therefore, it may be understood from the result of Example 7 that for polyethylene glycol succinate ester, its preferred content is 10 mg/L or higher.

In the case of poly (ethylene glycol)(propylene glycol) copolymer succinate ester of Example 8, as shown in Fig. 7, the pressure loss ratio and temperature rise ratio at 50°C are about 80% at the concentration of 10 mg/L. Namely, it can be seen that at this concentration of 10 mg/L, flow resistance reducing effect and heat transfer suppressing effect are provided. Therefore, it may be understood from the result of Example 8 that for poly (ethylene glycol)(propylene glycol) copolymer succinate ester, its preferred content is 10 mg/L or higher.

Further, from the more detailed result of Example 5, it has been found that mixing of rust-preventing agent, effervescence-preventing agent, pigment in the heat medium liquid provides no effect on the flow resistance reducing effect and heat transfer suppressing effect and such agents can be added as they are to the standard liquid-cooled internal combustion engine coolant without needing to change the composition of such standard liquid-cooled internal combustion engine coolant, thus providing superior handiness as well.

### <Effervescence Test>

Evaluation was made in accordance with the "Effervescence Test" described in the JIS standard ("antifreeze liquid" JIS K 2234:2006).

Specifically, samples were prepared by adding, to mixture liquid of an equimolar ratio of ethylene glycol and water, samples used in Examples 1-8 and Comparison Example by a ratio of 1g/L respectively. And, 50 mL of each sample was taken into a graduated cylinder having 100 mL capacity and kept at the room temperature for 30 minutes. Thereafter, the graduated cylinder was shaken up/down strongly for 100 times (about 30 seconds) and then, kept still. After lapse of 10 seconds, the volume of foam was read visually. Incidentally, in the determination of foam volume, the score was determined as zero if the state of foam after the lapse of 10 seconds of keeping still remained in the form of a ring on the inner wall of the graduated cylinder and the liquid top surface showed at the center.

**[Table 1]**

| sample | foam volume | effervescence evaluation |
|---|---|---|
| Example 1 | zero | No |
| Example 2 | zero | No |
| Example 3 | zero | No |
| Example 4 | zero | No |
| Example 5 | zero | No |
| Example 6 | zero | No |
| Example 7 | zero | No |
| Example 8 | zero | No |
| Comparison Example 1 | (30 mL) | Yes |

The results are shown in Table 1. The evaluation results of foam volumes for Examples 1-8 are zero, so it can be seen that they have no effervescence (foamability).

### Industrial Applicability

The heat medium liquid of the present invention can be used in a wide variety of applications as a heat medium liquid for e.g. hot/cold water server for air-conditioning.

## Claims

1. A heat medium liquid containing antifreeze liquid,
wherein to the heat medium liquid, as a flow friction reducing agent, there is added at least one kind of compound selected from the group consisting of water-soluble polymer compound, poly (polyethylene glycol) (propylene glycol) copolymer fatty acid ester, sulfonated tetrafluoroethylene polymer, amine oxide compound, polyethylene glycol dicarboxylic acid ester, polypropylene glycol dicarboxylic acid ester and poly (ethylene glycol) (propylene glycol) copolymer dicarboxylic ester.

2. The heat medium liquid of claim 1, wherein the antifreeze liquid comprises ethylene glycol or propylene glycol.

3. The heat medium liquid of claim 1 or 2, wherein the flow friction reducing agent comprises a water-soluble polymer compound and the heat medium liquid contains the flow friction reducing agent by a ratio equal to or greater than 100 mg/L.

4. The heat medium liquid of claim 1 or 2, wherein the flow friction reducing agent is poly (ethylene glycol) (propylene glycol) copolymer fatty acid ester, and the heat medium liquid contains the flow friction reducing agent by a ratio equal to or greater than 1g/L.

5. The heat medium liquid of claim 1 or 2, wherein the flow friction reducing agent is sulfonated tetrafluoroethylene polymer, and the heat medium liquid contains the flow friction reducing agent by a ratio equal to or greater than 10 mg/L.

6. The heat medium liquid of claim 1 or 2, wherein the flow friction reducing agent is amine oxide compound, and the heat medium liquid contains the flow friction reducing agent by a ratio equal to or greater than 1 g/L.

7. The heat medium liquid of claim 1 or 2, wherein the flow friction reducing agent is polyethylene glycol dicarboxylic acid ester, and the heat medium liquid contains the flow friction reducing agent by a ratio equal to or greater than 100 mg/L.

8. The heat medium liquid of claim 1 or 2, wherein the flow friction reducing agent is polypropylene glycol dicarboxylic acid ester, and the heat medium liquid contains the flow friction reducing agent by a ratio equal to or greater than 10 mg/L.

9. The heat medium liquid of claim 1 or 2, wherein the flow friction reducing agent is poly (ethylene glycol) (propylene glycol) copolymer dicarboxylic acid ester, and the heat medium liquid contains the flow friction reducing agent by a ratio equal to or greater than 10 mg/L.
